# EUROPÄISCHE PATENTSCHRIFT

(11) **EP 2 444 950 B1**
(45) Veröffentlichungstag und Bekanntmachung des Hinweises auf die Patenterteilung: **10.01.2018**
(21) Anmeldenummer: 11186430.2
(22) Anmeldetag: 25.10.2011
(51) Int. Cl.: G09B 19/02

(54) **Lernmittel für Rechenoperationen**
Learning aid for computer operations
Moyen d'apprentissage pour opérations de calcul

(30) Priorität: 25.10.2010 DE 102010060150
(43) Veröffentlichungstag der Anmeldung: 25.04.2012
(73) Patentinhaber: Schubi Lernmedien AG, 8207 Schaffhausen (CH)
(72) Erfinder: Wentzke, Helmut, 88250 Weingarten (DE)
(74) Vertreter: Bittner, Thomas L.

(56) Entgegenhaltungen:
- DE-A1-102006 048 489
- FR-A- 1 543 070
- GB-A- 2 360 112

## Beschreibung

Die Erfindung betrifft ein Lernmittel für Rechenoperationen.

### Hintergrund der Erfindung

Insbesondere im Rahmen des Unterrichts in der Grundschule, aber auch im Vorschulbereich, ist es üblich, Lernmittel einzusetzen, die den Schülern das Erlernen der Zahlenbereiche sowie von Rechenoperationen erleichtern. So sind beispielsweise mathematische Lernmittel bekannt, bei denen in einem Gehäuse drehbar gelagerte Kugelelemente von außen rotiert werden können, sodass der von außen sichtbare Abschnitt des jeweiligen Kugelelementes eine erste oder eine zweite Farbe trägt. Diese Lernmittel werden unter den Bezeichnungen "Abaco 20" sowie "Abaco 100" vertrieben. Die beiden Artikel verfügen über 20 bzw. 100 in dem zugehörigen Gehäuse drehbar gelagerte Kugelelemente, die jeweils hälftig mit einer ersten Farbe und hälftig mit einer zweiten Farbe auf der Kugeloberfläche versehen sind. Die Kugeln sind um 180° drehbar, sodass entweder die erste oder die zweite Farbe von der Gehäuseaußenseite zu sehen ist. Die Drehung der Kugelelemente wird mit Hilfe eines an den Kugelelementen jeweils gebildeten Anschlags begrenzt, der zur Drehbegrenzung auf der Rückseite der Deckfläche des Gehäuses des Lernmittels anschlägt. Mehrere Kugelelemente sind jeweils auf einer als Achse wirkenden Stiftlagerung drehbar angeordnet.

Im Dokument DE 10 2006 048 489 A1 ist ein Lernmittel für Rechenoperationen offenbart, bei dem in einem Gehäuse mehrere Kugelelemente drehbar gelagert sind. Die Kugelelemente sind in unterschiedlichen Drehstellungen einrastbar.

Im Dokument FR 1 543 070 ist ein Lernmittel beschrieben, bei dem im Bereich einer Deckfläche eines Gehäuses mehrere drehbar gelagerte Elemente vorgesehen sind, die in unterschiedlichen Drehstellungen einrasten. Die Elemente sind jeweils getrennt drehbar gelagert. Im Unterschied hierzu offenbart das Dokument GB 2 360 112 A ein Lernmittel, bei dem auf horizontal verlaufenden Stäben mehrere Elemente gemeinsam drehbar gelagert sind. Es ist ein Rastmechanismus vorgesehen, bei dem ein in einem Durchbruch des jeweiligen Elementes angeordnetes Rastelement mit einem Rastgegenelement auf dem Stab zusammenwirkt, auf dem die mehreren drehbar gelagerten Elemente angeordnet sind.

### Zusammenfassung der Erfindung

Aufgabe der Erfindung ist es, ein Lernmittel für Rechenoperationen mit verbesserten Nutzungseigenschaften anzugeben, welches insbesondere auch ausreichend robust für den täglichen Einsatz ist.

Diese Aufgabe wird erfindungsgemäß durch ein Lernmittel für Rechenoperationen nach dem unabhängigen Anspruch 1 gelöst. Vorteilhafte Ausgestaltungen der Erfindungen sind Gegenstand von abhängigen Unteransprüchen.

Das vorgeschlagene Lernmittel hat insbesondere den Vorteil, dass die Kugelelemente in unterschiedlichen Drehstellungen rastend gesichert sind, sodass eine vom Nutzer getroffene Auswahl zum Anzeigen einer Motiv- und / oder Farbmarkierung für das jeweilige Kugelelement nicht unbeabsichtigt wieder verloren gehen kann, indem die Kugel zufällig verdreht wird. Gerade in der täglichen Unterrichtspraxis ist es häufig gewünscht, dass eine von dem Nutzer (Schüler) eingestellte Farb- / Motivkombination für die mehreren Kugelelemente gesichert ist, insbesondere für eine Kontrolle durch die Lehrkraft. Auch bei einem nicht sorgsamen Umgang mit dem Lernmittel durch Kinder ist ein unbeabsichtigtes Verdrehen der Kugelelemente verhindert.

Die getrennte drehbare Lagerung der Kugelelemente in dem Gehäuse des Lernmittels erweitert die Möglichkeiten für eine individuelle Ausgestaltung der Kugelelemente, da beim Festlegen der Konstruktion eines Kugelelementes nicht auf die drehbare Lagerung der anderen Kugelelemente Rücksicht genommen werden muss, so dass die Lagerung für die einzelnen Kugelelemente auf unterschiedliche Art erfolgen kann. Allerdings kann auch vorgesehen sein, dass die Kugelelemente und deren zugehörige Lagerung für alle Kugelelemente im Wesentlichen gleich ausgestaltet sind. Dieses kann insbesondere in Verbindung mit den Motiv- und / oder Farbmarkierungen der Fall sein, wenn deren Ausgestaltung und Verteilung auf allen Kugelelementen gleich ist.

Die Anordnung der Kugelelemente und somit auch die Anordnung der von außen einsehbaren Abschnitte der Kugelelemente entspricht bevorzugt einer Matrixanordnung mit Zeilen und Spalten, wobei die Kugelelemente, die gemeinsam in einer Zeile oder einer Spalte angeordnet sind, nicht versetzt sind.

Bei einer bevorzugten Ausführung sind auf jedem Kugelelement wenigstens drei unterschiedliche Motiv- und / oder Farbmarkierungen, die zweckmäßig jedoch für alle Kugelelemente gleich sind. Jedem der Motiv- und / oder Farbmarkierungen ist zweckmäßig eine eigene rastende Drehstellung der Kugelelemente zugeordnet. Gegenüber den bekannten Lernmitteln ist auf diese Weise die Menge der ausführbaren Rechenoperationen erweitert.

Die Lagerungseinrichtungen sind mit einer Welle gebildet, an der ein Rastelement angeordnet ist, welches in den unterschiedlichen Drehstellungen rastend mit einem Rastgegenelement zusammenwirkt. Rastelement und Rastgegenelement stehen in den unterschiedlichen Drehstellungen bevorzugt im Eingriff miteinander. Sie bilden eine Rasteinrichtung. Es kann vorgesehen sein, dass eine Rasteinrichtung nur auf einer Seite des jeweiligen Kugelelements gebildet ist. Aber auch eine Doppelrastung, bei der auf beiden Seiten jedes Kugelelementes eine Rasteinrichtung gebildet ist, kann vorgesehen sein. Im Fall der einseitigen Rasteinrichtung ist die Welle auf der gegenüberliegenden Seite des Kugelelementes, also dort, wo die Rasteinrichtung nicht angeordnet ist, bevorzugt freilaufend gelagert. Die Rasteinrichtung kann für zwei benachbarte Kugelelemente bevorzugt jeweils auf der von dem anderen Kugelelement abgewandten Seite des zugehörigen Kugelelementes angeordnet sein. Das Rastgegenelement ist an einem in dem Gehäuse angeordneten Einbauteil gebildet, welches hierin montiert ist. Insbesondere kann eine lösbare Montage des Einbauteils in dem Gehäuse vorgesehen sein, beispielsweise mit Hilfe einer Schraubverbindung. In einer Weiterbildung ist vorgesehen, dass die Rasteinrichtung benachbart zu einem Stützelement angeordnet ist, an dem die Welle in einer Aufnahme drehbar gelagert ist. Auch eine Integration des Rastgegenelementes in das Stützelement kann vorgesehen sein.

Das Rastgegenelement kann auf dem Gehäuseboden angeordnet sein.

Bei einer zweckmäßigen Ausgestaltung der Erfindung kann vorgesehen sein, dass das Rastelement einstückig mit der Welle gebildet ist. Eine solche Ausführungsform ist beispielsweise mit Hilfe eines Spritzgussteils ausführbar.

Eine vorteilhafte Ausführungsform der Erfindung sieht vor, dass die Lagerungseinrichtungen auf der Rückseite der Gehäusedeckfläche gebildet sind. Die Lagerungseinrichtung für die Kugelelemente kann in dieser oder anderen Ausführungsformen Stützelemente umfassen, die von einer zugehörigen Gehäusewand vorspringen, insbesondere der Rückseite der Gehäusedeckfläche. Im Fall der Ausbildung der Lagerungseinrichtung mit einer Welle zur Aufnahme des jeweiligen Kugelelementes ist eine zugehörige Wellenlagerung bevorzugt an den Stützelementen gebildet.

Bei einer vorteilhaften Ausgestaltung der Erfindung kann vorgesehen sein, dass das Rastgegenelement an quer zur Welle verlaufenden Längsstegen gebildet ist. Die Längsstege können lösbar in dem Gehäuse montiert sein. Es kann auch vorgesehen sein, dass die Längsstege mit Hilfe von Abstandshaltern auf der Rückseite der Deckfläche des Gehäuses positioniert sind. Die Montage an den Abstandshaltern kann beispielsweise mit Hilfe einer Schraubverbindung erfolgen.

Eine Weiterbildung der Erfindung kann vorsehen, dass die Kugelelemente lösbar in dem Gehäuse angeordnet sind. Hierdurch ist beispielsweise ein Austausch oder Ersatz von Kugelelementen möglich.

Eine bevorzugte Weiterbildung der Erfindung sieht vor, dass die Kugelelemente um 360° drehbar sind. Eine Ausgestaltung kann vorsehen, dass die unterschiedlichen Drehstellungen, welche rastend gesichert sind und insoweit Raststellungen bilden, gleich verteilt über den Kreis von 360° angeordnet sind. Die Drehbarkeit der Kugelelemente um 360° bedeutet, dass die Kugelelemente unbegrenzt in die beiden Drehrichtungen gedreht werden können.

Bei einer zweckmäßigen Ausgestaltung der Erfindung kann vorgesehen sein, dass die Motiv- und / oder Farbmarkierungen in gleichmäßigen Abständen zueinander entlang einer mittigen Umfangslinie auf den Kugelelementen angeordnet sind.

Eine vorteilhafte Ausführungsform der Erfindung sieht vor, dass die Kugelelemente im Bereich des dem jeweiligen Kugelelement zugeordneten Durchbruchs einen umlaufenden Spaltbereich zwischen der Oberfläche des Kugelelementes und einem umlaufenden Rand des zugeordneten Durchbruchs minimierend angeordnet sind. Auf diese Weise ist bevorzugt eine hinsichtlich der Kugeloberfläche und dem inneren Rand des Durchbruchs berührungslose Lagerung gebildet, die gerade so ein schleifen der Oberflächen aufeinander vermeidet. Auf dieses Weise ist insbesondere sichergestellt, dass nicht unnötig Schutz in das Gehäuseinnere gelangt.

### Beschreibung bevorzugter Ausführungsbeispiele der Erfindung

Die Erfindung wird im Folgenden anhand von bevorzugten Ausführungsbeispielen unter Bezugnahme auf Figuren einer Zeichnung näher erläutert. Hierbei zeigen:
- Fig. 1: eine perspektivische Darstellung eines Lernmittels für Rechenoperationen von schräg oben,
- Fig. 2: eine perspektivische Schnittdarstellung eines Abschnitts des Lernmittels aus Fig. 1,
- Fig. 3: eine perspektivische Darstellung einzelner Bauteile des Lernmittels von schräg oben,
- Fig. 4: eine perspektivische Darstellung von einzelnen Bauelementen des Lernmittels von schräg unten,
- Fig. 5: eine perspektivische Darstellung eines Kugelelementes, dass auf einer Welle gelagert ist, an der ein Rastelement endseitig gebildet ist, und
- Fig. 6: eine perspektivische Darstellung eines Abschnitts des Lernmittels, wobei in Längsrichtung benachbarte Kugelelemente in unterschiedlichen Drehstellungen rastend gesichert sind.

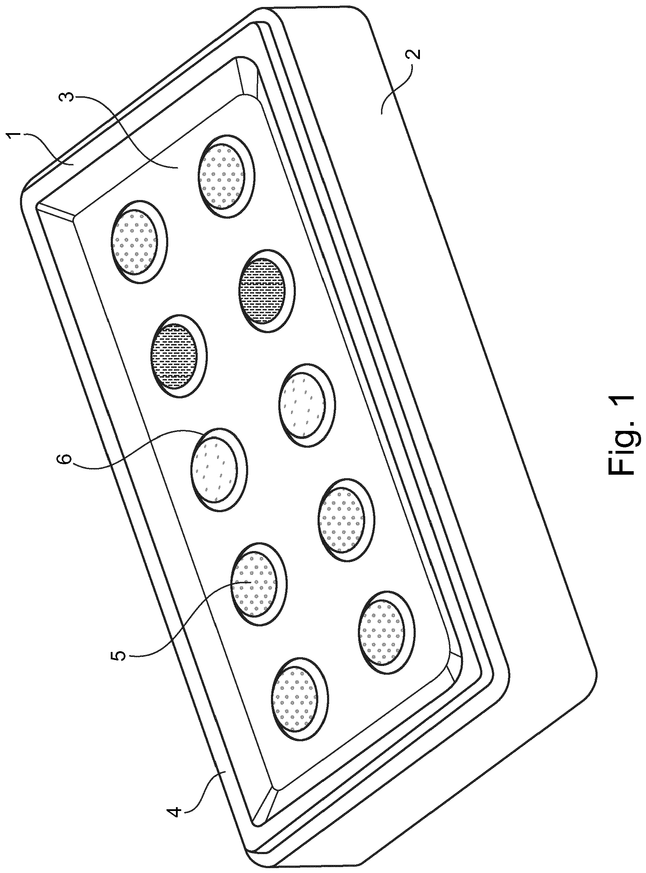

Fig. 1 zeigt eine perspektivische Darstellung einer Ausfuhrungsform eines Lernmittels für Rechenoperationen mit einem Gehäuse 1, welches mit einer Seitenwand 2 und einer Gehäusedeckfläche 3 gebildet ist. Bei der dargestellten Ausfuhrungsform ist die Gehäusedeckfläche 3 gegenüber einem oberen umlaufenden Rand 4 zurückgesetzt. Dieses hat insbesondere zur Folge, dass Kugelelemente 5, die in dem Gehäuse 1 hinter zugeordneten Durchbrüchen 6 gelagert sind, nicht über den oberen umlaufenden Rand 4 überstehen.

Das Gehäuse 1 sowie die Kugelelemente 5 sind bei der dargestellten Ausfuhrungsform aus einem Kunststoffmaterial. Sie können beispielsweise als Spritzgussteile hergestellt werden.

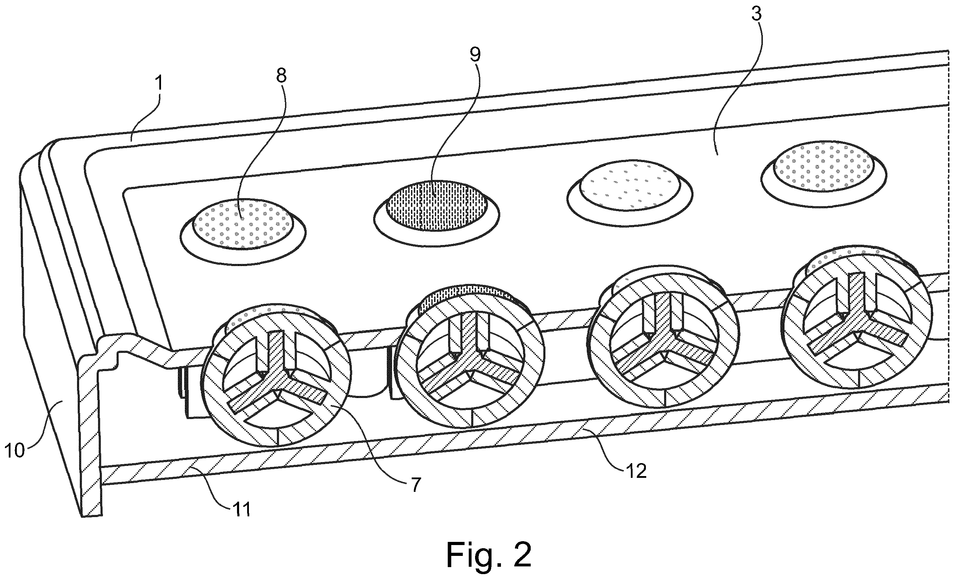

Fig. 2 zeigt eine perspektivische Darstellung eines Abschnitts des Lernmittels aus Fig. 1. Das Gehäuse 1 ist hierbei in Längsrichtung aufgeschnitten dargestellt, derart, dass vordere Kugelelemente 7 im Unterschied zu hinteren Kugelelementen 8 im Schnitt gezeigt sind. Die Kugelelemente 5 sind in dem Gehäuse 1 drehbar gelagert (vgl. Erläuterungen unten), sodass unterschiedliche Abschnitte der Oberfläche der Kugelelemente 5 in den Bereich des zugeordneten Durchbruchs 6 gedreht werden können und so von außen sichtbar sind. Die Abschnitte der Kugeloberfläche, welche in dem Bereich des zugeordneten Durchbruchs 6 gedreht werden können, verfugen bei der dargestellten Ausführungsform über Farbmarkierungen 9, die je nach Drehstellung des zugehörigen Kugelelementes 5 im Bereich des Durchbruchs 6 zu sehen sind oder nicht, nämlich dann, wenn sie sich im Gehäuse 1 befinden.

Aus Fig. 1 ergibt sich, dass das Gehäuse 1 mit einem Oberteil 10, an dem die Gehäusedeckfläche 3 gebildet ist, sowie einem Unterteil 11 ausgeführt ist, mit dem ein Boden 12 hergestellt ist.

Bei der dargestellten Ausführungsform weisen die Kugelelemente 5 jeweils drei Motiv- / Farbmarkierungen 9 auf, die entlang einer mittleren Umfangslinie der Kugelelemente 5 gleich über die Oberfläche des Kugelelementes 5 verteilt sind. Dementsprechend sind drei Drehstellungen für das jeweilige Kugelelement 5 vorgesehen, in der jeweils eine der drei Farb- / Motivmarkierungen 9 im Bereich des zugeordneten Durchbruchs 6 angeordnet und somit von außen sichtbar ist. Dieses ermöglicht die Darstellung mehrerer Rechenoperationen.

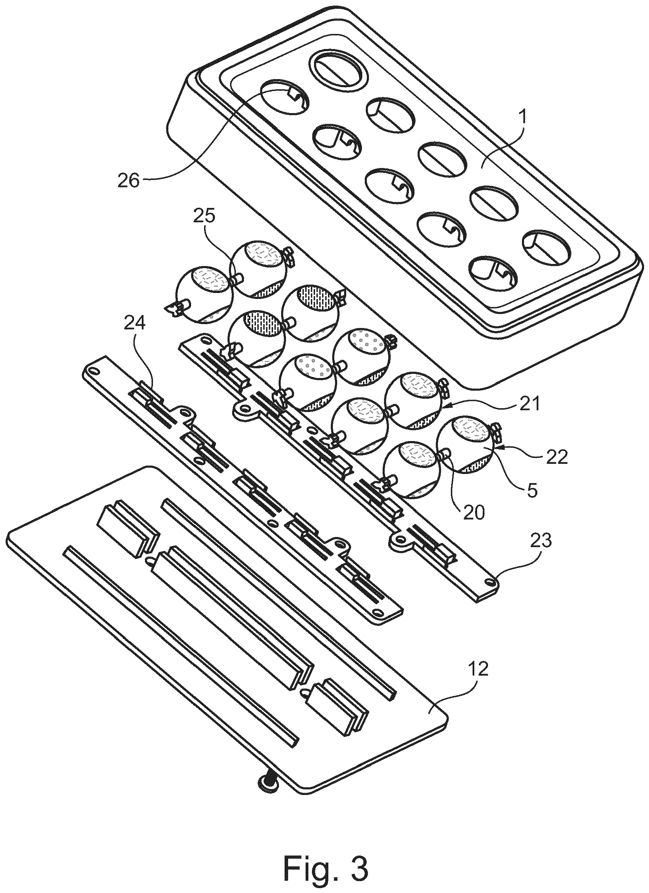

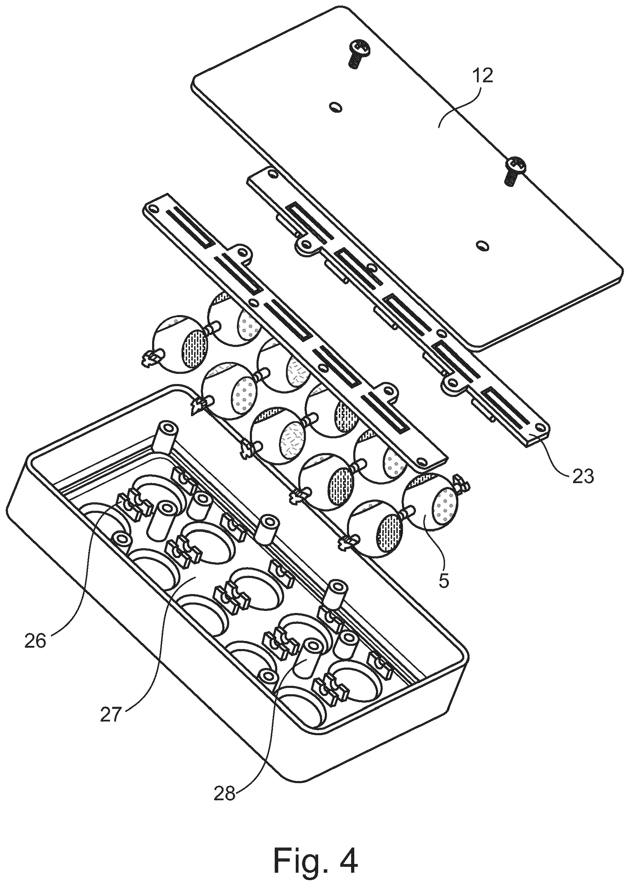

Fig. 3 und 4 zeigen perspektivische Darstellungen von Einzelbauelementen des Lernmittels von schräg oben und schräg unten. In den Fig. 3 und 4 werden für gleiche Merkmale die gleichen Bezugszeichen wie in den Fig. 1 und 2 verwendet.

Es ergibt sich, dass die Kugelelemente 5 jeweils separat mit Hilfe einer zugehörigen Welle 20 drehbar gelagert sind. An den Wellen 20 von Kugelelementen 5, die in Querrichtung des Gehäuses 1 nebeneinander angeordnet sind, befinden sich außenseitig, also auf der von dem gegenüberliegenden Kugelelement jeweils abgewandten Seite 21 Rastelemente 22, die mit an Längsstegen 23 gebildeten Rastgegenelementen 24 zusammenwirken, derart, dass die Kugelelemente 5 in drei unterschiedlichen Stellungen jeweils rastend gesichert sind. In den drei rastend gesicherten Drehstellungen ist jeweils eine der drei Motiv- / Farbmarkierungen 9 der Kugelelemente 5 im zugeordneten Durchbruch 6 angeordnet und von außen einsehbar.

Nicht mit dem Rastelement 22 versehene Enden 25 der Wellen 20 lagern in Stützelementen 26, die auf der Rückseite 27 der Gehäusedeckfläche 3 gebildet sind. Die Wellen 20 sind hierin freilaufend gelagert.

Auf Fig. 4 ergibt sich, dass die Längsstege 23 beim Zusammenbau des Lernmittels auf Abstandselemente 28 montiert werden, die ihrerseits ebenfalls auf der Rückseite 27 der Gehäusedeckfläche 3 gebildet sind.

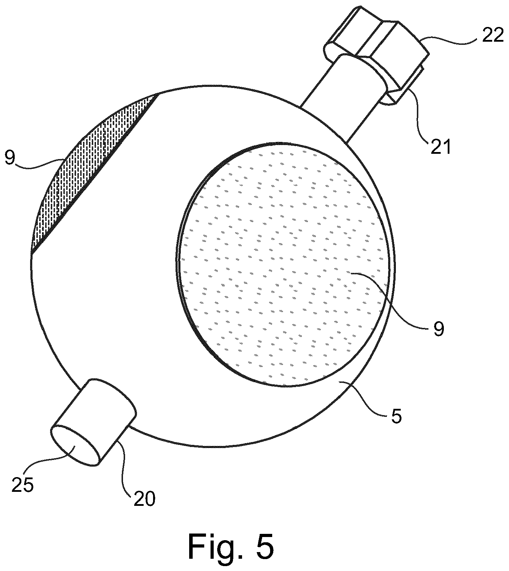

Fig. 5 zeigt eine perspektivische Darstellung eines Kugelelementes 5 mit der zugehörigen Welle 20, an der das Rastelement 22 endseitig gebildet ist.

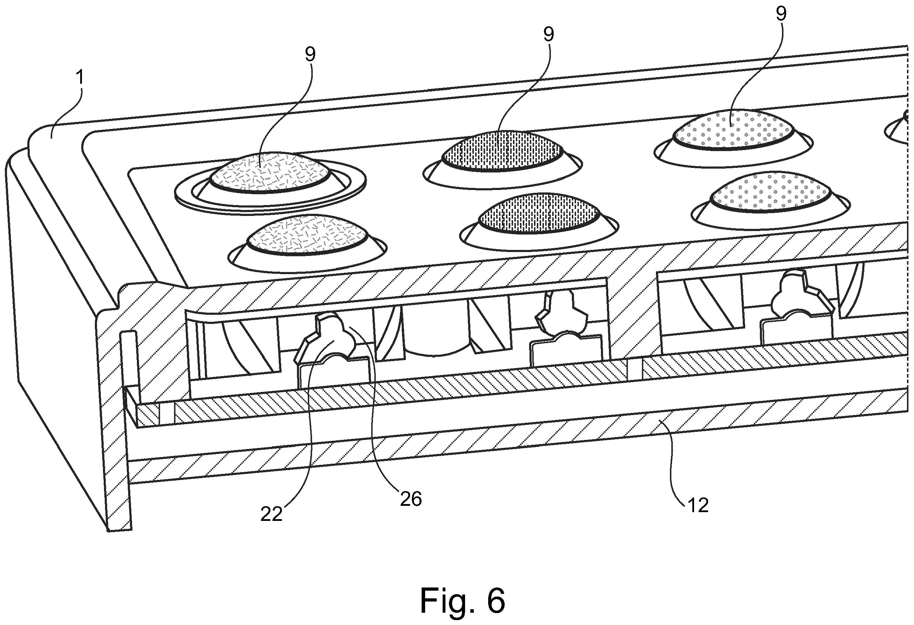

Fig. 6 zeigt eine perspektivische Darstellung der erläuterten Ausführungsform des Lernmittels mit aufgeschnittenem Gehäuse 1. Die in Längsrichtung des Gehäuses 1 nebeneinander angeordneten Kugelelemente 5 befinden sich jeweils in einer anderen Drehstellung, die mit Hilfe des Rastelementes 22 gegen zufälliges Verdrehen gesichert ist.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungen von Bedeutung sein.

## Patentansprüche

1. Lernmittel für Rechenoperationen, mit:
- einem Gehäuse (1) mit einer Gehäusedeckfläche (3) und einem Gehäuseboden (12),
- Durchbrüchen (6), die in der Gehäusedeckfläche (3) einer regelmäßigen Anordnung entsprechend gebildet sind,
- Kugelelementen (5), die im Gehäuse (1) jeweils hinter einem zugeordneten Durchbruch (6) und um eine Kugelsymmetrieachse drehbar angeordnet sind,
- Motiv- und / oder Farbmarkierungen (9), die auf den Kugelelementen (5) jeweils über die Kugelelementoberfläche verteilt gebildet sind,
- Rasteinrichtungen (22, 24), mit denen die Kugelelemente (5) jeweils in unterschiedlichen Drehstellungen rastend gesichert sind, derart, dass in den unterschiedlichen Drehstellungen jeweils eine der Motiv- und / oder Farbmarkierungen (9) im Bereich des dem jeweiligen Kugelelement (5) zugeordneten Durchbruchs (6) angeordnet und von außen einsehbar ist, und
- Lagerungseinrichtungen, die mit einer Welle (20) gebildet sind, an der ein Rastelement (22) angeordnet ist, welches in den unterschiedlichen Drehstellungen rastend mit einem Rastgegenelement (24) zusammenwirkt,
**dadurch gekennzeichnet, dass**
- die Kugelelemente (5) mittels der Lagerungseinrichtungen in dem Gehäuse (1) jeweils getrennt drehbar gelagert sind,
- bei den Lagerungseinrichtungen das Rastgegenelement (24) an einem in dem Gehäuse (1) angeordneten und hierin montierten Einbauteil (23) gebildet ist, wobei das Rastgegenelement (24) in dem Gehäuse (1) in Bezug auf die Welle (20) auf einer dem Gehäuseboden (12) zugewandten Seite angeordnet ist.

2. Lernmittel nach Anspruch 1, dadurch **gekennzeichne**t, dass das Rastelement (22) einstückig mit der Welle (20) gebildet ist.

3. Lernmittel nach Anspruch 1 oder 2, **dadurch gekennzeichnet, dass** die Lagerungseinrichtungen auf der Rückseite (27) der Gehäusedeckfläche (3) gebildet sind.

4. Lernmittel nach mindestens einem der vorangehenden Ansprüche, **dadurch gekennzeichnet, dass** das Rastgegenelement (24) an quer zur Welle (20) verlaufenden Längsstegen (23) gebildet ist.

5. Lernmittel nach mindestens einem der vorangehenden Ansprüche, **dadurch gekennzeichnet, dass** die Kugelelemente (5) lösbar in dem Gehäuse (1) angeordnet sind.

6. Lernmittel nach mindestens einem der vorangehenden Ansprüche, **dadurch gekennzeichnet, dass** die Kugelelemente (5) um 360° drehbar sind.

7. Lernmittel nach mindestens einem der vorangehenden Ansprüche, **dadurch gekennzeichnet, dass** die Motiv- und / oder Farbmarkierungen (9) in gleichmäßigen Abständen zueinander entlang einer mittigen Umfangslinie auf den Kugelelementen (5) angeordnet sind.

8. Lernmittel nach mindestens einem der vorangehenden Ansprüche, **dadurch gekennzeichnet, dass** die Kugelelemente (5) im Bereich des dem jeweiligen Kugelelement (5) zugeordneten Durchbruchs (6) einen umlaufenden Spaltbereich zwischen der Oberfläche des Kugelelementes (5) und einem umlaufenden Rand des zugeordneten Durchbruchs (6) minimierend angeordnet sind.

## Claims

1. A learning means for calcualtion operations, having:
- a housing (1) with a housing cover surface (3) and a housing base (12),
- openings (6), which are formed in accordance with a regular arrangement in the housing cover surface (3),
- ball elements (5), which are each arranged in the housing (1) behind an assigned opening (6)and in a manner rotatable about a ball axis of symmetry in the housing,
- motif and/or colour markings (9), which are each formed on the ball elements (5), distributed over the ball element surface,
- latching devices (22, 24), using which the ball elements (5) are secured in a latching manner in different respective rotational positions in such a manner that in each of the different rotational positions, one of the motif and/or colour markings (9) is arranged in the region of the opening (6) assigned to the respective ball element (5) and is visible from the outside, and
- bearing devices, which are formed with a shaft (20), on which a latching element (22) is arranged, which interacts in a latching manner with a counterpart latching element (24) in the different rotational positions,
**characterized in that**
- the ball elements (5) are each mounted in a separately rotatable manner in the housing (1) by means of the bearing devices,
- in the bearing devices, the counterpart latching element (24) is formed on an insertion part (23) arranged in the housing (1) and mounted therein, wherein the counterpart latching element (24) is arranged in the housing (1) on a side facing the housing base (12) in relation to the shaft (20).

2. The learning means according to Claim 1, **characterized in that** the latching element (22) is formed in one piece with the shaft (20).

3. The learning means according to Claim 1 or 2, **characterized in that** the bearing devices are formed on the rear side (27) of the housing cover surface (3).

4. The learning means according to at least one of the preceding claims, **characterized in that** the counterpart latching element (24) is formed on longitudinal bars (23) running transversely to the shaft (20).

5. The learning means according to at least one of the preceding claims, **characterized in that** the ball elements (5) are arranged in a detachable manner in the housing (1).

6. The learning means according to at least one of the preceding claims, **characterized in that** the ball elements (5) can be rotated by 360°.

7. The learning means according to at least one of the preceding claims, **characterized in that** the motif and/or colour markings (9) are arranged at uniform spacings from one another along a central circumferential line on the ball elements (5).

8. The learning means according to at least one of the preceding claims, **characterized in that** the ball elements (5) are arranged in the region of the opening (6) assigned to the respective ball element (5) so as to minimize a circumferential gap region between the surface of the ball element (5) and a circumferential edge of the assigned opening (6).

## Revendications

1. Produit d'apprentissage pour des opérations de calcul, avec :
- un boîtier (1) avec une surface de couverture (3) de boîtier et un fond inférieur (12) de boîtier,
- des ajours (6) qui sont créés dans la surface de couverture de boîtier (3) en correspondant à une disposition régulière,
- des éléments sphériques (5) qui sont disposés dans le boîtier (1), chaque fois derrière un ajour (6) associé et en étant rotatifs autour d'un axe de symétrie sphérique,
- des marquages (9) par motif et/ou par couleur, qui sont créés sur les éléments sphériques (5) chaque fois sur la surface des éléments sphériques,
- des dispositifs d'enclenchement (22, 24) par lesquels les éléments sphériques (5) sont bloqués en s'enclenchant chacun dans les différentes positions de rotation, de telle sorte que dans les différentes positions de rotation, chaque fois l'un des marquages par motif et/ou par couleur (9) soit placé dans la zone de l'ajour (6) associé à l'élément sphérique (5) respectif et visible de l'extérieur et
- des dispositifs de logement, qui sont créés par un arbre (20) sur lequel est disposé un élément d'enclenchement (22), qui dans les différentes positions de rotation coopère par enclenchement avec un élément d'enclenchement (24) antagoniste,
**caractérisé en ce que**
- les éléments sphériques (5) sont logés en étant respectivement rotatifs séparément dans le boîtier (1) au moyen des dispositifs de logement,
- sur les éléments de logement, l'élément d'enclenchement (24) antagoniste est créé sur une pièce encastrée (23) disposée dans le boîtier (1) et montée dans celui-ci, l'élément d'enclenchement (24) antagoniste étant placé dans le boîtier (1) par rapport à l'arbre (20) sur un côté faisant face au fond inférieur (12) de boîtier.

2. Produit d'apprentissage selon la revendication 1, **caractérisé en ce que** l'élément d'enclenchement (22) est créé en monobloc avec l'arbre (20).

3. Produit d'apprentissage selon la revendication 1 ou 2, **caractérisé en ce que** les dispositifs de logement sont créés sur la face arrière (27) de la surface de couverture (3) de boîtier.

4. Produit d'apprentissage selon au moins l'une quelconque des revendications précédentes, **caractérisé en ce que** l'élément d'enclenchement (24) antagoniste est créé sur des barrettes longitudinales (23) s'étendant à la transversale de l'arbre (20).

5. Produit d'apprentissage selon au moins l'une quelconque des revendications précédentes, **caractérisé en ce que** les éléments sphériques (5) sont placés de manière amovible dans le boîtier (1).

6. Produit d'apprentissage selon au moins l'une quelconque des revendications précédentes, **caractérisé en ce que** les éléments sphériques (5) sont rotatifs de 360°.

7. Produit d'apprentissage selon au moins l'une quelconque des revendications précédentes, **caractérisé en ce que** les marquages par motif et/ou par couleur (9) sont placés à des écarts mutuels réguliers sur les éléments sphériques (5), le long d'une ligne périphérique médiane.

8. Produit d'apprentissage selon au moins l'une quelconque des revendications précédentes, **caractérisé en ce que** les éléments sphériques (5) sont disposés dans la zone de l'ajour (6) respectivement associé à l'élément sphérique (5) en minimisant une zone de fente annulaire entre la surface de l'élément sphérique (5) et un bord périphérique de l'ajour (6) associé.
